Europäisches Patentamt

European Patent Office

Office européen des brevets

(19)

(11)  EP 1 147 938 B1

(12)  FASCICULE DE BREVET EUROPEEN

(45) Date de publication et mention
de la délivrance du brevet:
**21.01.2004   Bulletin 2004/04**

(51) Int Cl.⁷: **B60N 2/02**, B60N 2/34

(21) Numéro de dépôt: **01400750.4**

(22) Date de dépôt: **22.03.2001**

(54) **Procédé de gestion du fonctionnement d'un siège et siège mettant en oeuvre ce procédé**

Regelungsverfahren eines Sitzes und Durchführung dieses Verfahrens

Process of controlling a seat and seat using this process

(84) Etats contractants désignés:
**DE GB**

(30) Priorité:  **24.03.2000   FR 0003810**

(43) Date de publication de la demande:
**24.10.2001   Bulletin 2001/43**

(73) Titulaire: **Messier-Bugatti**
**78140 Velizy Villacoublay (FR)**

(72) Inventeur: **Renault, Guy**
**93800 Epinay Sur Seine (FR)**

(74) Mandataire: **Blot, Philippe Robert Emile et al**
**c/o Cabinet Lavoix,**
**2, place d'Estienne d'Orves**
**75441 Paris Cedex 09 (FR)**

(56) Documents cités:
**FR-A- 2 740 744**          **FR-A- 2 748 240**
**US-A- 4 669 780**          **US-A- 4 802 706**
**US-A- 5 254 924**

**Description**

La présente invention concerne un procédé dé gestion du fonctionnement d'un siège équipé d'au moins un actionneur comportant des moyens de suivi d'au moins une variable caractéristique de l'effort produit par l'actionneur et des moyens de commande de l'actionneur dans un premier et second sens, le procédé comportant des étapes consistant en :

- une mesure de la ou chaque variable caractéristique ;
- une évaluation de la ou chaque variable caractéristique à partir d'au moins un critère d'évaluation prédéterminé ; et
- la mise en oeuvre d'une mesure appropriée sur le siège en fonction du résultat de ladite évaluation ;

Dans les véhicules de transport de passagers, tel que les avions et les trains, il est connu de prévoir des sièges équipés d'actionneurs électriques. Chaque siège comporte généralement un repose-jambes et un dossier déplaçables par rapport à une assise. Ceux-ci sont articulés chacun à une extrémité de l'assise et sont chacun associés à un actionneur électrique permettant leur déplacement.

Afin d'éviter que le repose-jambes ou le dossier en mouvement ne blesse un passager, ou encore qu'il ne détériore un bagage entreposé sur la course de déplacement de l'élément mobile, il est connu, de mesurer en continu l'intensité du courant consommé par chaque actionneur. Si l'intensité le courant consommé dépasse une valeur de seuil prédéterminée, l'acticnneur est immédiatement arrêté, ou activé en sens inverse sur une distance prédéterminée comme indiqué dans le document FR 2 748 240.

En effet, lorsque l'élément de siège commandé par l'actionneur rencontre un obstacle, cet élément se trouve immobilisé. Le moteur électrique de l'actionneur le commandant est alors bloqué, de sorte que l'intensité du courant consommé par ce moteur s'accroît de manière très importante. L'arrêt de l'actionneur, lorsqu'un courant de forte intensité traversant le moteur est détecté, évite que le siège ou l'obstacle qu'il rencontre ne soit abîmé.

Afin d'éviter des arrêts intempestifs des actionneurs du siège, les seuils d'intensité provoquant l'arrêt sont fixés à une valeur relativement élevée. Ainsi, dans certaines circonstancés, la protection assurée par la mise en place d'un seuil d'intensité de courant peut être insuffisante pour protéger efficacement un bagage, le membre d'un passager et le siège lui-même.

L'invention a pour but de proposer un procédé de gestion du fonctionnement d'un siège qui réduise encore les risques de blessures pour un passager et augmente la durée de vie du siège.

A cet effet, l'invention a pour objet un procédé de gestion du fonctionnement d'un siège du type précité, caractérisé en ce que ladite évaluation comporte :

- une étape d'application d'un premier critère d'évaluation de la ou chaque variable caractéristique mesurée lorsque l'actionneur est commandé dans le premier sens ; et
- une étape d'application d'un second critère d'évaluation de la ou chaque variable caractéristique mesurée lorsque l'actionneur est commandé dans le second sens, le second critère d'évaluation étant différent du premier critère d'évaluation.

Suivant des modes particuliers de mise en oeuvre, le procédé comporte l'une ou plusieurs des caractéristiques suivantes :

- ladite mesure appropriée est la commande en sens inverse de l'actionneur ;
- au moins une variable caractéristique de l'effort produit par un actionneur est une variable caractéristique du courant électrique consommé par cet actionneur ;
- ladite variable caractéristique est l'intensité consommée par l'actionneur, et les premier et second critères d'évaluation prédéterminés comportent des comparaisons de l'intensité consommée à des seuils prédéterminés distincts ; et
- ladite variable caractéristique est la dérivée par rapport au temps de l'intensité consommée par l'actionneur, et les premier et second critères d'évaluation prédéterminés comportent des comparaisons de la dérivée par rapport au temps de l'intensité consommée à des seuils prédéterminés distincts.

L'invention a en outre pour objet un siège de véhicule du type comportant un dossier, une assise et un repose-jambes, l'un au moins du dossier et du repose-jambes étant articulé sur l'assise, le siège comportant au moins un actionneur pour le déplacement dans deux sens opposés de l'un ou de chacun du dossier et du repose-jambes, des moyens de suivi d'au moins une variable caractéristique de l'effort produit par l'actionneur, des moyens d'évaluation de la ou chaque variable caractéristique à partir d'au moins un critère d'évaluation prédéterminé, et des moyens de mise en oeuvre d'une mesure appropriée sur le siège en fonction du résultat de ladite évaluation. Il comporte une unité de gestion du fonctionnement du siège comportant :

- des moyens d'application d'un premier critère d'évaluation de la ou chaque variable caractéristique mesurée lorsque l'actionneur (24) est commandé dans le premier sens ; et
- des moyens d'application d'un second critère d'évaluation de la ou chaque variable caractéristique mesurée lorsque l'actionneur (24) est commandé dans le second sens, le second critère d'évaluation étant différent du premier critère d'évaluation.

L'invention sera mieux comprise à la lecture de la description qui va suivre, donnée uniquement à titre d'exemple et faite en se référant aux dessins, sur lesquels :

- la figure 1 est une vue schématique d'un siège de véhicule selon l'invention ;
- la figure 2 est un organigramme de l'algorithme mis en oeuvre dans l'unité centrale de gestion du fonctionnement du siège de la figure 1.

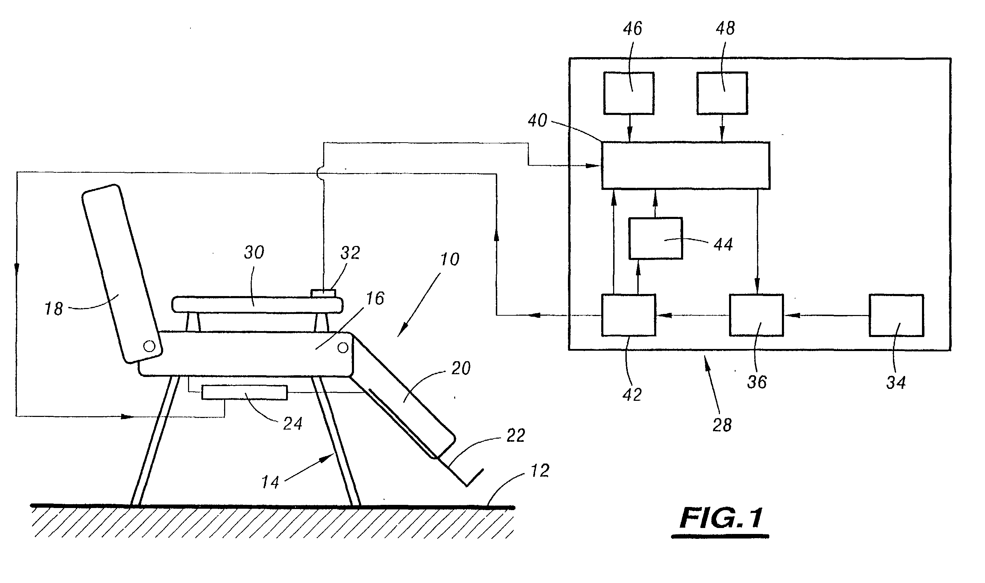

Le siège 10 représenté sur la figure 1 est un siège de passager d'un avion. Ce siège est fixé sur le sol 12 de l'avion.

Il comporte un piétement 14 solidaire du sol 12 sur lequel repose une assise 16 sensiblement horizontale. A une extrémité de l'assise est articulé un dossier 18. A l'autre extrémité de l'assise 16, est articulé un repose-jambes 20 déplaçable entre une position rabattue sensiblement verticale au-dessous de l'assise 16 et une position étendue sensiblement horizontale dans le prolongement de l'assise 16.

Le siège 10 comporte en outre un repose-pieds 22 monté déplaçable à coulissement par rapport au repose-jambes 20 dans le prolongement de celui-ci.

Le repose-pieds 22 est déplaçable entre une position escamotée à l'intérieur du repose-jambes 20 et une position étendue dans laquelle il prolonge celui-ci et est pratiquement totalement sorti.

Un actionneur électrique 24 est monté entre l'assise 16 et le repose-jambes 20 afin d'assurer un déplacement de ce dernier entre sa position rabattue et sa position étendue.

L'actionneur 24 est alimenté en courant électrique depuis une unité 28 de gestion du fonctionnement du siège.

En outre, le siège comporte sur un accoudoir 30 sur lequel est fixé un clavier de commande 32 permettant la commande de l'actionneur 24 afin de provoquer un déplacement du repose-jambes.

Le clavier de commande 32 est relié à l'unité 28 de gestion du fonctionnement du siège.

L'unité 28 comporte une source 34 d'alimentation de l'actionneur. Cette dernière est formée par exemple d'un transformateur relié au réseau d'alimentation électrique générale de l'avion par des moyens de connexion adaptés.

En outre, une interface d'alimentation 36 assurant l'alimentation de l'actionneur 24 est prévue en sortie de la source d'alimentation 34. Cette interface assure la mise en forme du courant d'alimentation de l'actionneur en fonction du sens d'actionnement et de la vitesse de déplacement souhaités.

L'interface d'alimentation 36 est pilotée par une unité centrale de traitement d'informations 40. Cette unité 40 est reliée au clavier de commande 32, afin de recueillir les ordres de commande de l'utilisateur.

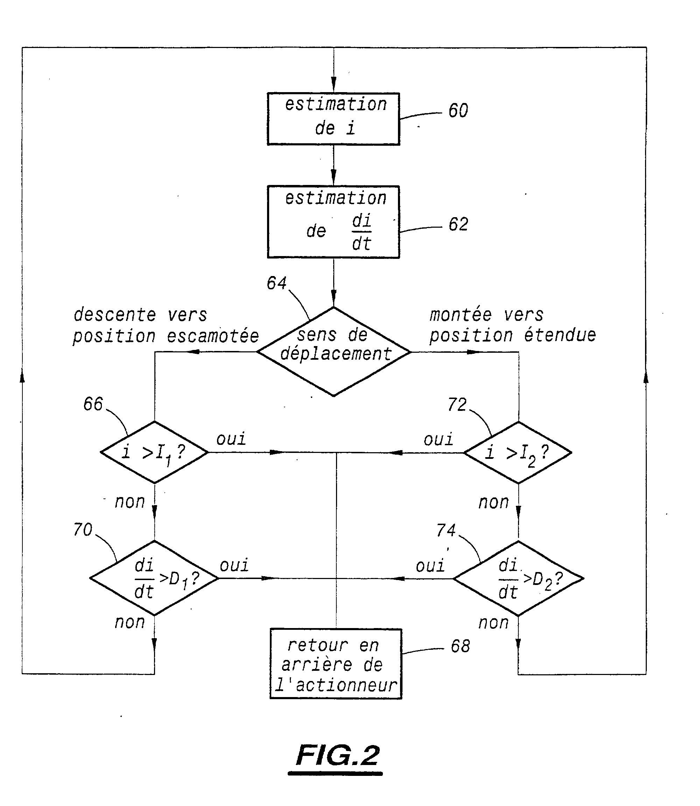

L'unité 40 met en oeuvre un programme de commande de l'actionneur de tout adapté dans lequel est prévue une routine de gestion particulière qui sera exposée dans la suite de ia description en regard de la figure 2.

Entre l'interface d'alimentation 36 et l'actionneur 24 sont disposés des moyens 42, destinés au suivi d'une variable caractéristique du courant électrique consommé par l'actionneur 24 lors de son fonctionnement.

Les moyens de suivi 42 sont reliés à l'unité centrale de traitement d'informations 40.

Les moyens de suivi 42 sont adaptés pour déterminer l'intensité instantanée i du courant consommé par l'actionneur 24 lors d'une phase de fonctionnement de celui-ci.

L'unité centrale de gestion 28 comporte en outre des moyens de dérivation 44 dont l'entrée est reliée aux moyens de suivi 42 et dont la sortie est reliée à l'unité centrale de traitement d'informations 40. Ces moyens de dérivation sont adaptés pour fournir en sortie, la dérivée par rapport au temps, notée $\frac{di}{dt}$, de l'intensité instantanée i.

Ainsi, l'unité centrale de traitement d'informations 40 reçoit en continu à la fois ia valeur i de l'intensité du courant consommé par l'actionneur 24 et la valeur $\frac{di}{dt}$ de la dérivée par rapport au temps de l'intensité du courant consommé.

En outre, des moyens de mémorisation 46 et 48 sont reliés à l'unité centrale de traitement d'informations 40. Dans chacun de ces moyens de mémorisation est stockée une paire de valeurs de seuil prédéterminées respectivement notées $(I_1, D_1)$ et $(I_2$ et $D_2)$.

Ces paires de valeurs de seuil correspondent à des seuils d'arrêt de l'actionneur 24 auxquels sont comparées les valeurs de l'intensité i et de sa dérivée par rapport au temps $\frac{di}{dt}$. Les seuils $(I_1, D_1)$ sont utilisés lorsque le repose-jambes est amené vers sa position escamotée, alors que les seuils $(I_2$ et $D_2)$ sont utilisés lorsque ce repose-jambes est amené vers sa position étendue

Pour le fonctionnement du siège, l'unité centrale de traitement d'informations 40 met en oeuvre un programme connu en soi adapté afin de commander l'interface d'alimentation 36 pour que celle-ci assure l'alimentation de l'actionneur 24 dans un sens ou dans l'autre par inversion du sens de courant, en fonction des informations reçues depuis le clavier 32.

De plus, pendant le fonctionnement de l'actionneur 24, l'unité centrale de traitement d'informations 40 met en oeuvre en continu une routine dont l'algorithme est illustré sur la figure 2 Les étapes successives de cet algorithme sont mises en oeuvre en boucle.

L'algorithme comporte d'abord une étape 60 d'estimation de l'intensité i du courant consommé par l'actionneur 24. L'intensité i est fournie par les moyens de suivi 42.

A l'étape suivante 62, l'unité centrale de traitement d'informations 40 recueille une estimation de la dérivée par rapport au temps $\frac{di}{dt}$ de l'intensité du courant consommé. Cette estimation est fournie par les moyens de dérivation 44.

Lors de l'étape suivante notée 64, l'unité centrale de traitement d'informations 40 détermine le sens de déplacement de l'actionneur 24 à partir des informations reçues du clavier 32.

Suivant que le repose-jambes 20 soit amené vers sa position escamotée ou sa position étendue, les étapes de l'une ou l'autre des branches de l'organigramme sont mises en oeuvre.

Plus précisément, si le sens de déplacement est tel que le repose-jambes est amené vers sa position escamotée, l'intensité i est d'abord comparée à l'étape 66 à une première valeur de seuil prédéterminé $I_1$ mémorisée dans les moyens 46.

Cette première valeur de seuil $I_1$ est fixée expérimentalement et correspond à une valeur minimale de courant consommé par l'actionneur 24 lorsque le repose-jambes ou le repose-pieds le prolongeant heurte un obstacle, alors qu'il retourne vers sa position escamotée, les jambes d'un passager assis sur le siège appuyant sur la surface supérieure du repose-jambes. La première valeur du seuil $I_1$ est fixée à un niveau relativement bas.

Si la valeur de l'intensité i du courant fournie par les moyens de suivi 42 est supérieure à la première valeur du seuil $I_1$, un retour en arrière de l'actionneur sur une faible course est commandé à l'étape 68 par l'unité centrale de traitement d'informations 40 pilotant l'interface 36 en ce sens. Le retour en arrière est effectué par exemple pendant une brève période de temps prédéterminée au cours de laquelle le moteur de l'actionneur est mis en rotation en sens inverse.

En variante, le retour en arrière est effectué sur une brève course prédéterminée de l'actionneur. Dans ce cas, l'actionneur doit être équipé de moyens de mesure en continu de sa position, teis qu'un potentiomètre.

Si, au contraire, l'intensité i est inférieure à la valeur de seuil $I_1$, l'étape de test 70 est alors mise en oeuvre. Lors de cette étape, la valeur $\frac{di}{dt}$ de la dérivée par rapport au temps de l'intensité i du courant consommé par l'actionneur 24 est comparée une première valeur de seuil $D_1$, mémorisée dans les moyens de mémorisation 46.

La première valeur de seuil $D_1$ correspond à la valeur minimale de la dérivée par rapport au temps de l'intensité du courant consommé par l'actionneur 24 lorsque le repose-jambes 20 rencontre un obstacle alors qu'il est amené vers sa position escamotée, les jambes d'un utilisateur appuyant sur la surface supérieure du repose-jambes 20. La valeur du seuil $D_1$ est fixée à un niveau relativement bas.

Si la valeur estimée de la dérivée par rapport au temps $\frac{di}{dt}$ de l'intensité i du courant consommé est supérieure à la première valeur de seuil $D_1$, un bref retour en arrière de l'actionneur 24 est commandé par l'étape 68. Au contraire, si cette condition n'est pas remplie, l'actionneur n'est pas arrêté et l'étape 60 est à nouveau mise en oeuvre.

Si le sens de déplacement, constaté lors du test effectué à l'étape 64, provoque la remontée du repose-jambes vers sa position étendue, le courant estimé i est comparé à l'étape 72 à une seconde valeur de seuil $I_2$ mémorisée dans les moyens de mémorisation 48.

Cette seconde valeur de seuil $I_2$ est supérieure à la première valeur de seuil $I_1$. Elle est fixée expérimentalement et correspond à la valeur minimale de l'intensité du courant consommé par l'actionneur 24 lorsque le repose-jambes est ramené vers sa position étendue alors qu'il supporte les jambes de l'utilisateur du siège et qu'il rencontre un obstacle entravant le iibre cheminement du repose-jambes.

A l'étape 72, si la valeur i estimée est supérieure à la seconde valeur de seuil $I_2$, un bref retour en arrière de l'actionneur 24 est commandé à l'étape 68. En revanche, si cette condition n'est pas satisfaite, la valeur $\frac{di}{dt}$ de la dérivée par rapport au temps de l'intensité du courant consommé par l'actionneur 24, est comparée à l'étape 74 à une seconde valeur de seuil prédéterminé $D_2$.

Cette seconde valeur de seuil prédéterminé $D_2$ est déterminée expérimentalement. Elle correspond à la valeur minimale de la dérivée par rapport au temps de l'intensité du courant consommé par l'actionneur 24 lorsque le repose-jambes est ramené vers sa position étendue et rencontre un obstacle. Cette seconde valeur de seuil est supérieure à la première valeur de seuil $D_1$.

Si la valeur $\frac{di}{dt}$ est supérieure à la seconde valeur de seuil $D_2$, un bref retour en arrière de l'actionneur 24 est commandé à l'étape 68. Si tel n'est pas le cas, l'étape 60 est à nouveau mise en oeuvre.

On comprend que suivant le sens de déplacement de l'actionneur 24, la valeur de l'intensité i du courant consommé, ainsi que sa dérivée première par rapport au temps $\frac{di}{dt}$, sont comparées à des seuils prédéterminés dont les valeurs dépendent du sens de déplacement du repose-jambes.

Si l'intensité où sa dérivée première vient à dépasser l'une de ces valeurs de seuil, le bref retour en arrière de l'actionneur est commandé, évitant que le repose-jambes ne continue son déplacement ce qui pourrait blesser le passager, détériorer un bagage, ou encore endommager le siège lui-même.

Toutefois, dans la mesure où le poids des jambes du passager appliqué sur le repose-jambes 20 a des effets opposés suivant que le repose-jambes soit descendu vers sa position escamotée ou remonte vers sa position étendue, les valeurs des seuils prédéterminés sont différentes.

En effet, lors de la descente du repose-jambes, le poids des jambes de l'utilisateur contribue au déplacement du repose-jambes, de sorte que le courant consommé par l'actionneur 24 est généralement faible. Ainsi, le seuil $I_1$ peut être fixé à une valeur faible, permettant un arrêt de l'actionneur, dès que l'intensité du courant consommé par l'actionneur 24 subit une légère augmentation.

Au contraire, lorsque le repose-pieds est remonté et se déplace vers sa position étendue, l'intensité du courant consommé par l'actionneur est généralement élevé puisque l'actionneur doit alors vaincre l'effet du poids des jambes de l'utilisateur du siège. Ainsi, l'intensité du courant consommé étant comparée à la seconde valeur de seuil $I_2$, l'arrêt de l'actionneur est commandé seulement lorsque l'intensité du courant dépasse la seconde valeur de seuil $I_2$. Ainsi, la valeur de seuil $I_2$ peut être fixée à une valeur suffisamment élevée pour que, même avec un passager ayant des jambes très lourdes, l'arrêt de l'actionneur ne se produise pas de manière non désirée.

L'établissement du seuil $I_2$ à une valeur élevée n'empêche pas la mise en oeuvre d'un seuil d'arrêt très bas lors du déplacement du repose-jambes vers sa position escamotée. augmentant ainsi considérablement la sécurité lors du fonctionnement du siège En effet, les risques de voir le repose-jambes heurter un obstacle sont plus importants lorsque le repose-jambes se déplace vers sa position escamotée que vers sa position étendue. En effet, lorsque le repose-jambes descend, les obstacles qu'il peut rencontrer sont en dehors du champ visuel dé l'utilisateur.

Ainsi, l'utilisation de seuils distincts suivant le sens de déplacement du repose-pieds permet d'affiner le procédé de gestion du fonctionnement du siège, évitant les arrêts intempestifs de l'actionneur, comme cela peut être constaté lorsqu'un unique seuil est mis en oeuvre.

De même, les seuils, en comparaison de la dérivée par rapport au temps de l'intensité du courant consommé par l'actionneur, peuvent également être fixés de manière différenciée suivant le sens de déplacement du repose-pieds.

On conçoit qu'un tel procédé de surveillance peut également être mis en oeuvre pour des actionneurs commandant le. déplacement d'autres parties du siège, et notamment pour un actionneur commandant le dossier articulé du siège.

Dans le mode de réalisation décrit ici, l'intensité et sa dérivée première par rapport au temps sont comparées à des valeurs de seuil distinctes en fonction du sens de déplacement de l'actionneur. Toutefois, de manière générale, tout type de variable caractéristique de l'effort produit par les actionneurs lors de l'utilisation peut être utilisé. Ainsi, les variables caractéristiques du courant consommé décrites précédemment, qui sont représentatives de l'effort appliqué par l'actionneur, peuvent être remplacées par le couple appliqué par un actionneur ou par la puissance délivrée par celui-ci. En particulier, les moyens de suivi décrits peuvent être remplacés par des capteurs de couple, les comparaisons opérées étant alors mises en oeuvre sur les couples mesurés.

En outre, suivant une autre variante, lorsque l'un des seuils prédéterminés est franchi, plutôt que de commander l'actionneur en sens inverse comme cela est décrit ici, l'actionneur est seulement stoppé.

## Revendications

1. Procédé de gestion du fonctionnement d'un siège (10) équipé d'au moins un actionneur (24) comportant des moyens (42, 44) de suivi d'au moins une variable caractéristique de l'effort produit par l'actionneur (24) et des moyens (36) de commande de l'actionneur dans un premier et second sens, le procédé comportant des étapes consistant en :

   - une mesure de la ou chaque variable caractéristique ;
   - une évaluation de la ou chaque variable caractéristique à partir d'au moins un critère d'évaluation prédéterminé ; et
   - la mise en oeuvre d'une mesure appropriée sur le siège en fonction du résultat de ladite évaluation ;
   - une étape d'application d'un premier critère d'évaluation de la ou chaque variable caractéristique mesurée lorsque l'actionneur (24) est commandé dans le premier sens ; **caractérisé en ce qu'**il comporte:

      - une étape d'application d'un second critère d'évaluation de la ou chaque variable caractéristique mesurée lorsque l'actionneur (24) est commandé dans le second sens, le second critère d'évaluation étant différent du premier critère d'évaluation.

2. Procédé de gestion du fonctionnement d'un siège selon la revendication 1, **caractérisé en ce que** ladite mesure appropriée est la commande en sens inverse de l'actionneur (24).

3. Procédé de gestion du fonctionnement d'un siège selon la revendication 2, **caractérisé en ce qu'**au moins une variable caractéristique de l'effort produit par un actionneur est une variable caractéristique du courant électrique consommé par cet actionneur.

4. Procédé de gestion du fonctionnement d'un siège selon la revendication 3, **caractérisé en ce que** ladite variable caractéristique est l'intensité consommée par l'actionneur, et **en ce que** les premier et second critères d'évaluation prédéterminés comportent des comparaisons de l'intensité consommée à des seuils prédéterminés distincts.

5. Procédé de gestion du fonctionnement d'un siège selon la revendication 3, **caractérisé en ce que** ladite variable caractéristique est la dérivée par rapport au temps de l'intensité consommée par l'actionneur, et **en ce que** les premier et second critères d'évaluation prédéterminés comportent des comparaisons de la dérivée par rapport au temps de l'intensité consommée à des seuils prédéterminés distincts.

6. Siège de véhicule (10) du type comportant un dossier (18), une assise (16) et un repose-jambes (20), l'un au moins du dossier (18) et du repose-jambes (20) étant articulé sur l'assise (16), le siège (10) comportant au moins un actionneur (24) pour le déplacement dans deux sens opposés de l'un ou de chacun du dossier (18) et du repose-jambes (20), des moyens de suivi d'au moins une variable caractéristique de l'effort produit par l'actionneur, des moyens d'évaluation de la ou chaque variable caractéristique à partir d'au moins un critère d'évaluation prédéterminé, et des moyens de mise en oeuvre d'une mesure appropriée sur le siège en fonction du résultat de ladite évaluation, comportant une unité (28) de gestion du fonctionnement du siège comportant :

- des moyens d'application d'un premier critère d'évaluation de la ou chaque variable caractéristique mesurée lorsque l'actionneur (24) est commandé dans le premier sens ; **caractérisé en ce qu'**elle comporte

- des moyens d'application d'un second critère d'évaluation de la ou chaque variable caractéristique mesurée lorsque l'actionneur (24) est commandé dans le second sens, le second critère d'évaluation étant différent du premier critère d'évaluation.

**Patentansprüche**

1. Verfahren zur Steuerung der Funktionsweise eines Sitzes (10), der mit zumindest einem Schalter (24) ausgestattet ist, welcher Nachlaufsteuervorrichtungen (42, 44) für zumindest eine kennzeichnende Variable der durch den Schalter (24) erzeugten Beanspruchung und Vorrichtungen (36) zum Steuern des Schalters in einer ersten und zweiten Richtung aufweist, wobei das Verfahren die Schritte umfasst, die bestehen aus:

- einer Messung der oder der jeweiligen kennzeichnenden Variablen;
- einer Auswertung der oder der jeweiligen kennzeichnenden Variablen ausgehend von zumindest einem vorab bestimmten Auswertkriterium; und

- der Umsetzung einer geeigneten Maßnahme an dem Sitz in Abhängigkeit von dem Ergebnis der Auswertung;
- einem Schritt der Anwendung eines ersten Auswertkriteriums für die oder die jeweilige gemessene, kennzeichnende Variable, wenn der Schalter (24) in der ersten Richtung gesteuert wird; **dadurch gekennzeichnet, dass** es aufweist:

- einen Schritt der Anwendung eines zweiten Auswertkriteriums für die oder die jeweilige gemessene, kennzeichnende Variable, wenn der Schalter (24) in der zweiten Richtung gesteuert wird, wobei sich das zweite Auswertkriterium von dem ersten Auswertkriterium unterscheidet.

2. Verfahren zur Steuerung der Funktionsweise eines Sitzes gemäß Anspruch 1, **dadurch gekennzeichnet, dass** die geeignete Maßnahme die Steuerung in umgekehrter Richtung des Schalters (24) ist.

3. Verfahren zur Steuerung der Funktionsweise eines Sitzes gemäß Anspruch 2, **dadurch gekennzeichnet, dass** zumindest eine kennzeichnende Variable der von einem Schalter erzeugten Beanspruchung eine kennzeichnende Variable für den von diesem Schalter verbrauchten elektrischen Strom ist.

4. Verfahren zur Steuerung der Funktionsweise eines Sitzes gemäß Anspruch 3, **dadurch gekennzeichnet, dass** die kennzeichnende Variable die von dem Schalter verbrauchte Stromstärke ist, und dass das erste vorab festgelegte und das zweite vorab festgelegte Auswertkriterium Vergleiche der Stromstärke, die bei unterschiedlichen, vorab festgelegten Schwellenwerten verbraucht wird, umfassen.

5. Verfahren zur Steuerung der Funktionsweise eines Sitzes gemäß Anspruch 3, **dadurch gekennzeichnet, dass** die kennzeichnende Variable die Ableitung nach der Zeit der von dem Schalter verbrauchten Stromstärke ist, und dass das erste vorab festgelegte und das zweite vorab festgelegte Auswertkriterium Vergleiche der Ableitung nach der Zeit der verbrauchten Stromstärke mit unterschiedlichen, vorab bestimmten Schwellenwerten umfassen.

6. Fahrzeugsitz (10) der Art mit einer Rückenlehne (18), einer Sitzfläche (16) und einer Beinstütze (20), wobei zumindest eines der Elemente Rückenlehne (18) und Beinstütze (20) gelenkig an der Sitzfläche (16) angebracht ist, wobei der Sitz (10) zumindest einen Schalter (24) für die Verstellung in zwei entgegen gesetzte Richtungen des einen Elementes oder jedes der Elemente aus Rückenlehne (18) und Beinstütze (20) aufweist, sowie Nachlaufsteuervorrichtungen für zumindest eine kennzeichnende Variable der durch den Schalter erzeugten Beanspruchung, Vorrichtungen zur Auswertung der oder der jeweiligen kennzeichnenden Variablen anhand zumindest eines vorbestimmten Auswertkriteriums, und Vorrichtungen zur Durchführung einer geeigneten Maßnahme an dem Sitz in Abhängigkeit von dem Ergebnis der Auswertung, mit einer Einheit (28) zur Steuerung der Funktionsweise des Sitzes mit:

- Vorrichtungen zur Anwendung eines ersten Auswertkriteriums für die oder die jeweilige gemessene, kennzeichnende Variable, wenn der Schalter (24) in der ersten Richtung gesteuert wird; **dadurch gekennzeichnet, dass** sie aufweist:
- Vorrichtungen zur Anwendung eines zweiten Auswertkriteriums für die oder die jeweilige gemessene, kennzeichnende Variable, wenn der Schalter (24) in der zweiten Richtung gesteuert wird, wobei sich das zweite Auswertkriterium von dem ersten Auswertkriterium unterscheidet.

## Claims

1. Process for controlling a seat (10) fitted with at least one actuator (24) comprising follow-up means (42, 44) with at least one characteristic variable of the force produced by the actuator (24) and means (36) for controlling the actuator in a first and second direction, the process comprising steps, consisting of :

    - measuring the or each characteristic variable;
    - evaluating the or each characteristic variable from at least one predetermined evaluation criterion; and
    - implementing an appropriate measure on the seat according to the result of the said evaluation;
    - a step for applying a first evaluation criterion to the or each measured characteristic variable when the actuator (24) is controlled in the first direction;

    **characterised in that** it comprises:

    - a step for applying a second evaluation criterion to the or each measured characteristic variable when the actuator (24) is controlled in the second direction, the second evaluation criterion being different to the first evaluation criterion.

2. Process for controlling a seat according to claim 1, **characterised in that** the said appropriate measure is the control of the actuator (24) in a reverse direction.

3. Process for controlling a seat according to claim 2, **characterised in that** at least one characteristic variable of the force produced by an actuator is a characteristic variable of the electric current consumed by the actuator.

4. Process for controlling a seat according to claim 3, **characterised in that** the said characteristic variable is the current consumed by the actuator and **in that** the first and second evaluation criteria comprise comparisons of the current consumed at distinct predetermined thresholds.

5. Process for controlling a seat according to claim 3, **characterised in that** the said characteristic variable is the time derivative of the current consumed by the actuator, and **in that** the first and second predetermined evaluation criteria comprise comparisons of the time derivative of the current consumed at distinct predetermined thresholds.

6. A vehicle seat (10) of the type comprising a back (18), a base (16) and a leg-rest (20), with at least one of either the back (18) or the leg-rest (20) being articulated on the base (16), the seat (10) comprising at least one actuator (24) for the displacement in two opposite directions of at least one of either the back (18) or the leg-rest (20), follow-up means with at least one characteristic variable of the force produced by the actuator, means for evaluating the or each characteristic variable from at least one predetermined evaluation criterion, and means for implementing an appropriate measure on the seat according to the result of the said evaluation, comprising a unit (28) for controlling the seat, comprising :

    - means for applying a first evaluation criterion to the or each measured characteristic variable when the actuator (24) is controlled in the first direction;

    **characterised in that** it comprises

    - means for applying a second evaluation criterion to the or each measured characteristic variable when the actuator (24) is controlled in the second direction, the second evaluation criterion being different to the first evaluation criterion.

FIG.1

**FIG.2**